# EUROPÄISCHE PATENTSCHRIFT

(11) **EP 3 271 044 B1**
(45) Veröffentlichungstag und Bekanntmachung des Hinweises auf die Patenterteilung: **06.05.2020**
(21) Anmeldenummer: 16710120.3
(22) Anmeldetag: 08.03.2016
(51) Int. Cl.: F02M 37/24, B01D 36/00, G01F 23/24

(54) **KRAFTSTOFFFILTER**
FUEL FILTER
FILTRE À CARBURANT

(30) Priorität: 20.03.2015 DE 102015205065
(43) Veröffentlichungstag der Anmeldung: 24.01.2018
(73) Patentinhaber: Mahle International GmbH, 70376 Stuttgart (DE)
(72) Erfinder: SCHADLER, Werner, 8430 Seggauberg (AT)
(74) Vertreter: BRP Renaud & Partner mbB Rechtsanwälte Patentanwälte Steuerberater
(86) Internationale Anmeldenummer: PCT/EP2016/054890
(87) Internationale Veröffentlichungsnummer: WO 2016/150694

(56) Entgegenhaltungen:
- WO-A1-02/50498
- WO-A1-2016/057493
- DE-A1-102012 005 206
- US-A- 5 138 881
- US-A- 5 256 574
- US-A1- 2006 196 264

## Beschreibung

Die vorliegende Erfindung betrifft einen Kraftstofffilter mit einem Gehäuse und einem darin angeordneten Filterelement sowie mit einem Wassersammelraum zum Sammeln des aus dem Kraftstoff abgeschiedenen Wassers und einem Wasserstandssensor gemäß dem Oberbegriff des Anspruchs 1. Die Erfindung betrifft außerdem einen Wasserstandssensor für ein derartiges Kraftstofffilter.

Aus der DE 10 2012 005 206 A1 ist ein gattungsgemäßes Kraftstofffilter, insbesondere ein Dieselkraftstofffilter, einer Brennkraftmaschine sowie ein Heiz-Sensor-Modul bekannt. Ein Filtergehäuse weist dabei wenigstens einen Einlass für den zu reinigenden Kraftstoff und wenigstens einen Auslass für den gereinigten Kraftstoff auf. In dem Innenraum des Filtergehäuses ist ein Filterelement derart angeordnet, dass es den wenigstens einen Einlass von dem wenigstens einen Auslass trennt. Wenigstens ein Heizelement der Heizeinrichtung ist dabei in einer Heizkammer angeordnet, die sich außerhalb des Innenraums des Filtergehäuses bezüglich einer Kraftstoffströmung zwischen dem Einlass und einer Rohseite des Filterelements befindet und die mit einem Modulgehäuse des Heiz-Sensor-Moduls mit begrenzt wird. Hierdurch soll es möglich sein, sowohl das Kraftstofffilter als auch das Heiz-Sensor-Modul möglichst kompakt bauen zu können und zugleich den Kraftstoff einfach zu temperieren.

Damit ein gattungsgemäßes Kraftstofffilter langfristig einwandfrei funktioniert, muss das im Wassersammelraum abgeschiedene Wasser von Zeit zu Zeit abgelassen werden. Wann hierfür der richtig Zeitpunkt ist, wird über den Wasserstandssensor bestimmt, der bislang zwei Metallstifte aufwies. Um die Metallstifte jedoch vollständig vom Kraftstoff bzw. vom Wasser isolieren zu können, wurden die Metallstifte je mit einem Dichtring isoliert. Zugleich wurden die Metallstifte beschichtet, beispielsweise mit Zinn, Silber, oder ähnlichem, um resistent gegen Oxidation und damit schleichende Isolation zu sein. Die aus dem Stand der Technik bekannte Bauweise ist dabei jedoch nicht nur aufwendig, sondern auch teuer.
Die vorliegende Erfindung beschäftigt sich daher mit dem Problem, für ein Kraftstofffilter der gattungsgemäßen Art eine verbesserte oder zumindest eine alternative Ausführungsform anzugeben, die sich insbesondere kostengünstiger realisieren lässt.
Dieses Problem wird erfindungsgemäß durch den Gegenstand des unabhängigen Anspruchs 1 gelöst. Vorteilhafte Ausführungsformen sind Gegenstand der abhängigen Ansprüche.
Die vorliegende Erfindung beruht auf dem allgemeinen Gedanken, zumindest einen bislang in einem Wasserstandssensor eines Kraftstofffilters vorhandenen Metallstift durch elektrisch leitenden Kunststoff zu ersetzen. Das erfindungsgemäße Kraftstofffilter weist in bekannter Weise ein Gehäuse sowie ein darin angeordnetes Filterelement, insbesondere ein Ringfilterelement, sowie einen Wassersammelraum zum Sammeln des aus dem Kraftstoff abgeschiedenen Wassers auf. Zur Erfassung eines Wasserstandes in dem Wassersammelraum ist dabei ein Wasserstandssensor vorgesehen, an dem zumindest ein erster Pol aus einem elektrisch leitenden Kunststoff ausgebildet ist. Durch den Ersatz des bisher für den ersten Pol erforderlichen Metallstifts, verbunden mit dessen vergleichsweise aufwendiger Oxidbeschichtung und Abdichtung, kann durch den Wasserstandssensor mit zumindest einem ersten Pol aus einem elektrisch leitenden Kunststoff eine deutlich kostengünstigere Lösung realisiert werden, die insbesondere das bisher aufwendige Aufbringen der Oxidationsschutzschicht erübrigt.

Bei einer vorteilhaften Weiterbildung der erfindungsgemäßen Lösung ist das Filtergehäuse zumindest teilweise aus elektrisch leitendem Kunststoff ausgebildet und bildet dadurch einen zweiten elektrisch leitenden Pol des Wasserstandssensors. Dies stellt somit die erste Ausführungsform des erfindungsgemäßen Kraftstofffilters dar, bei welchem der Wasserstandssensor selbst den ersten Pol aus elektrisch leitendem Kunststoff aufweist, wogegen der für den Wasserstandssensor erforderliche zweite elektrisch leitende Pol durch das aus elektrisch leitendem Kunststoff ausgebildete Filtergehäuse gebildet wird. Alternativ kann selbstverständlich hierbei das Filtergehäuse auch aus Metall ausgebildet sein und darüber den elektrisch leitenden zweiten Pol bilden. Bei einer alternativen Ausführungsform der erfindungsgemäßen Lösung ist an dem Wasserstandssensor ein zweiter Pol aus einem elektrisch leitenden Kunststoff angeordnet. Diese Alternative sieht somit beide elektrisch leitenden Pole am Wasserstandssensor vor, wobei in diesem Fall beide elektrischen Pole aus elektrisch leitfähigem Kunststoff ausgebildet sind. Um dabei einen Kurzschluss zwischen den beiden Polen vermeiden zu können, ist zwischen diesen eine Isolationsschicht, beispielsweise aus einem elektrisch nicht leitenden Kunststoff, vorgesehen. Zur Herstellung eines derartigen Wasserstandssensor bzw. eines solchen Kraftstofffilters kann der Wasserstandssensor beispielsweise als Zweikomponenten-Kunststoffspritzgussteil ausgebildet sein, wobei eine Kunststoffkomponente elektrisch leitfähig ausgebildet ist, beispielsweise durch Zumischung von Kohlefasern, und dadurch den elektrisch leitfähigen Kunststoff für die beiden Pole bildet, während die andere Kunststoffkomponente elektrisch nicht leitfähig ist und die beiden Pole voneinander trennt, das heißt elektrisch isoliert. Die Herstellung eines derartigen Wasserstandsensors ist ebenfalls vergleichsweise einfache und kostengünstig möglich.

Bei einer weiteren alternativen Ausführungsform der erfindungsgemäßen Lösung ist der zweite elektrisch leitende Pol des Wasserstandsensors als Metallstift am Wasserstandsensor ausgebildet. In diesem Fall hätte der erfindungsgemäße Wasserstandssensor weiterhin einen Metallstift, der den zweiten elektrisch leitenden Pol bildet, wobei jedoch der erste elektrisch leitende Pol durch elektrisch leitfähigen Kunststoff gebildet wird und somit im Vergleich zu aus dem Stand der Technik bekannten Wasserstandssensoren zumindest ein Metallstift eingespart werden kann. In diesem Fall ist der verbleibende Metallstift mit einer Isolationsschicht gegen Nebenschluss versehen und mit dem elektrisch leitfähigen Kunststoff umspritzt.

Zweckmäßig ist der elektrisch leitfähige Kunststoff ein faserverstärkter Thermoplast mit mindestens 8 Gew.-%, vorzugsweise 40 Gew.-%, Kohlefasern. Durch das Vorsehen von Kohlefasern kann die elektrische Leitfähigkeit verbessert werden. Alternativ ist auch die Zugabe von Ruß möglich. Die im elektrisch leitfähigen Kunststoff vorgesehenen Kohlefasern und/oder der Ruß übernehmen dabei nicht nur die Funktion der elektrischen Leitfähigkeit, sondern steifen den Wasserstandssensor zusätzlich aus. Alternativ können natürlich auch weitere Bestandteile/Zusätze die elektrische Leitfähigkeit des Kunststoffs bewirken, wie z.B. Metallfasern, Aluminiumflocken, usw. Es ist auch denkbar, dass der Kunststoff selbst ohne weitere Zugabe elektrisch leitfähig ist, wie z.B. Poly-3-,4-ethylendioxythiophen, Polystyrolsulfonat, usw. Selbstverständlich können zusätzlich auch andere Fasern, insbesondere Glasfasern, als Verstärkungselemente vorgesehen sein, durch welche der Wasserstandssensor weiter ausgesteift werden kann.

Bei einer weiteren vorteilhaften Ausführungsform der erfindungsgemäßen Lösung weist der elektrisch leitfähige Kunststoff ein PA66 GF22 CF8 auf und ist damit aus Polyamid 66 sowie 22 Gew.-% Glasfasern und 8 Gew.-% Kohlefasern ausgebildet. Eine alternative Ausführungsform wird durch einen elektrisch leitfähigen Kunststoff aus PA66 CF40 gebildet und besteht somit aus Polyamid 66 und 40 Gew.-% Kohlefasern oder wird durch einen elektrisch leitfähigen Kunststoff aus PA6 CF40 gebildet und besteht somit aus Polyamid 6 und 40 Gew.-% Kohlefasern.

Die vorliegende Erfindung beruht weiter auf dem allgemeinen Gedanken, einen Wasserstandssensor für ein zuvor beschriebenes Kraftstofffilter anzugeben, bei welchem ein erster sowie ein zweiter Pol des Wasserstandssensor aus einem elektrisch leitfähigen Kunststoff ausgebildet sind. Ein derart erfindungsgemäß ausgebildeter Wasserstandssensor erübrigt die bisher erforderliche Metallstifte sowie deren aufwendige Beschichtung und Abdichtung gänzlich, wodurch der erfindungsgemäße Wasserstandssensor deutlich kostengünstiger hergestellt werden kann.

Bei einer vorteilhaften Weiterbildung des Wasserstandssensor kann dieser als Zweikomponenten-Kunststoffspritzgussteil ausgebildet sein, wobei eine Kunststoffkomponente elektrisch leitfähig ausgebildet ist und dadurch die beiden Pole bildet, während die zweite Kunststoffkomponente elektrisch nicht leitfähig ist und die beiden Pole dadurch elektrisch voneinander isoliert. Ein derart hergestellter Wasserstandssensor kann wiederum kostengünstig und dennoch hocheffektiv hergestellt werden.
Weitere wichtige Merkmale und Vorteile der Erfindung ergeben sich aus den Unteransprüchen, aus den Zeichnungen und aus der zugehörigen Figurenbeschreibung anhand der Zeichnungen.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Kraftstofffilter,
- Fig. 2: einen erfindungsgemäßen Wasserstandssensor mit einem metallischen Stift und einem aus einem elektrisch leitenden Kunststoff gebildeten Pol,
- Fig. 3: eine Darstellung wie in Fig. 2, jedoch mit zwei jeweils aus einem elektrisch leitfähigen Kunststoff gebildeten Polen.

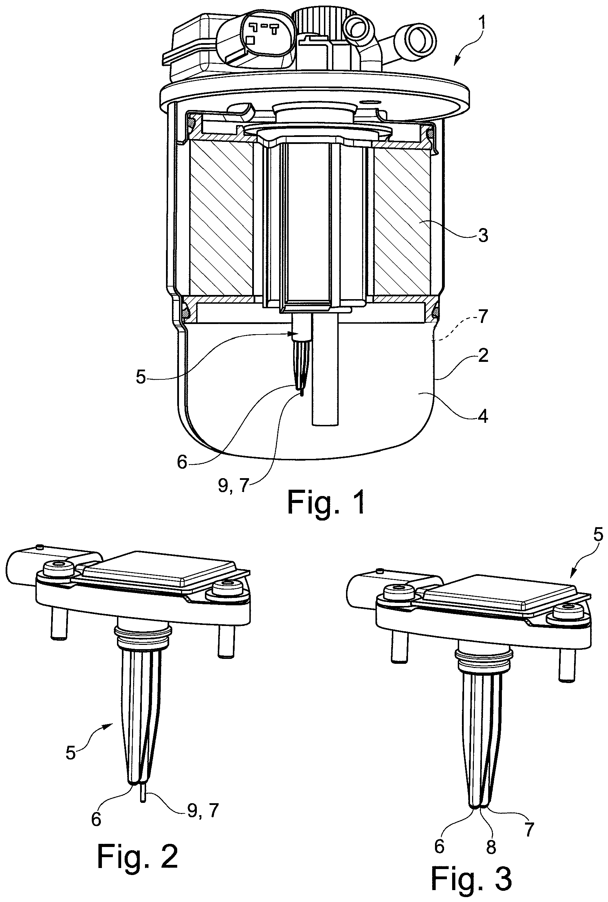

Entsprechend der Fig. 1, weist ein erfindungsgemäßen Kraftstofffilter 1, welches beispielsweise als Dieselkraftstofffilter ausgebildet sein kann, ein Gehäuse 2 sowie ein darin angeordnetes Filterelement 3 auf. Unterhalb des Filterelements 3, welches beispielsweise als Ringfilterelement ausgebildet sein kann, ist ein Wassersammelraum 4 zum Sammeln von aus dem Kraftstoff abgeschiedenem Wasser vorgesehen. Um einen Wasserstand innerhalb des Wassersammelraums 4 erfassen zu können, ist ein Wasserstandssensor 5 vorgesehen. Erfindungsgemäß ist nun an diesem Wasserstandssensor 5 ein erster Pol 6 aus einem elektrisch leitfähigen Kunststoff ausgebildet. Für die Ausbildung eines zweiten elektrischen Pols 7 sind dabei unterschiedlichste Ausführungsformen denkbar.
Bei einer ersten alternativen Ausführungsform kann der zweite Pol 7 im Gehäuse 2 angeordnet sein, wobei in diesem Fall das Gehäuse 2 aus Metall oder zumindest teilweise aus einem elektrisch leitenden Kunststoff ausgebildet ist. Dieser Fall ist mit unterbrochen gezeichneter Bezugszeichenlinie in der Fig. 1 dargestellt.
Alternativ hierzu kann an dem Wasserstandssensor 5 der zweite Pol 7 ebenfalls aus einem elektrisch leitfähigen Kunststoff ausgebildet sein, wie dies beispielsweise beim dem Wasserstandssensor 5 gemäß der Fig. 3 dargestellt ist. In diesem besonderen Fall kann der Wasserstandssensor 5 als sogenanntes Zweikomponenten-Kunststoffspritzgussteil ausgebildet sein, wobei eine erste Kunststoffkomponente elektrisch leitfähig ist und die beiden Pole 6, 7 des Wasserstandssensor bildet, wogegen eine zweite Kunststoffkomponente elektrisch nicht leitfähig ist und beispielsweise als Träger-Isolierkunststoff 8 zwischen den beiden Polen 6, 7 angeordnet ist und diese elektrisch voneinander isoliert.
Wiederum alternativ hierzu kann auch vorgesehen sein, dass der zweite elektrisch leitende Pol 7 des Wasserstandssensors 5 als Metallstift 9 am Wasserstandssensor 5 ausgebildet ist, wie dies beispielsweise beim dem Wasserstandssensors 5 gemäß der Fig. 2 der Fall ist. Dieser Metallstift 9 ist dann vorzugsweise mit einem elektrisch leitfähigen Kunststoff umspritzt oder mit einer Oxidschicht, beispielsweise einer Silber- oder Zinnschicht, überzogen.

Sämtlichen alternativen Ausführungsformen des Wasserstandssensors 5 und damit auch des erfindungsgemäßen Kraftstofffilters 1 ist dabei gemein, dass am Wasserstandssensor 5 zumindest einer der bislang dort vorgesehenen zwei Metallstifte zur Bildung der beiden Pole 6, 7 entfallen kann, wodurch der erfindungsgemäße Wasserstandssensor 5 nicht nur deutlich einfacher herzustellen ist, sondern auch erheblich kostengünstiger.

Als elektrisch leitfähiger Kunststoff kann beispielsweise ein faserverstärkter Thermoplast mit zumindest 8 Gew.-% Kohlefasern eingesetzt werden. Die Kohlenfasern bewirken dabei nicht nur die elektrische Leitfähigkeit, sondern steifen des Wasserstandssensor 5 zusätzlich aus. Selbstverständlich können auch weitere aussteifende Fasern, wie beispielsweise Glasfasern, als Verstärkungselement in dem elektrisch leitfähigen Kunststoff eingebettet sein. Ein besonders bevorzugter elektrisch leitfähiger Kunststoff für die Anwendung bei dem erfindungsgemäßen Wasserstandssensor 5 ist beispielsweise ein PA6 CF40 mit Polyamid 6, 40 Gew.-% Kohlefasern. Durch einen höheren Kohlefaseranteil und/oder Rußanteil kann eine verbesserte Oberflächenleitfähigkeit hergestellt werden. Eine Lösung kann auch sein, einen elektrischen Leiter in den Kunststoff einzupressen, damit die Kunststoffoberfläche aus Matrixmaterial durchbrochen wird. Der Erhöhung des Kohlefaseranteils bis auf 40 Gew.-%, erhöht die Wahrscheinlichkeit von ununterbrochenen Leitbahnen durch den Kunststoff deutlich. Das heißt die Leitfähigkeit nimmt zu (Widerstand ab). Eine hohe Leitfähigkeit ist für die Funktion der elektronischen Schaltung wichtig. Der hohe Faseranteil des Kunststoffes garantiert darüber hinaus hervorragende Festigkeitswerte. Damit eignet sich das Material für Kunststoffgehäuse. Gleichzeitig kann dieser Kunststoff hervorragend ESD Spannungen abführen, wenn er als Gehäusewerkstoff verwendet wird. Im Kontakt mit Kraftstoffen und Wasser in Verbindung mit Gleichstrom von der Messelektronik verhält sich der Werkstoff im Gegensatz zu Metallen inert, was ebenfalls einen erheblichen Vorteil darstellt.

Selbstverständlich kann der Wasserstandssensor 5 auch separat zum Kraftstofffilter 1 angeboten werden, beispielsweise als Ersatzund/oder Nachrüstteil.

Mit dem Wasserstandssensor 5 lässt sich somit zumindest eine der bisher zwei erforderliche Metallelektroden einsparen, wodurch eine erhebliche Kostenersparnis erzielt werden kann.

## Patentansprüche

1. Kraftstofffilter (1) mit einem Gehäuse (2) und einem darin angeordneten Filterelement (3), sowie mit einem Wassersammelraum (4) zum Sammeln von aus dem Kraftstoff abgeschiedenen Wasser und mit einem Wasserstandssensor (5) zur Erfassung eines Wasserstandes in dem Wassersammelraum (4),
**dadurch gekennzeichnet,**
**dass** an dem Wasserstandssensor (5) ein erster Pol (6) aus einem elektrisch leitenden Kunststoff ausgebildet ist.

2. Kraftstofffilter nach Anspruch 1,
**dadurch gekennzeichnet,**
**dass** das Gehäuse (2) aus Metall oder zumindest teilweise aus elektrisch leitendem Kunststoff ausgebildet ist und einen zweiten elektrisch leitenden Pol (7) des Wasserstandssensors (5) bildet.

3. Kraftstofffilter nach Anspruch 1,
**dadurch gekennzeichnet,**
**dass** an dem Wasserstandssensor (5) ein zweiter Pol (7) aus einem elektrisch leitenden Kunststoff angeordnet ist.

4. Kraftstofffilter nach Anspruch 3,
**dadurch gekennzeichnet,**
**dass** der Wasserstandssensor (5) als Zweikomponenten-Kunststoffspritzgussteil ausgebildet ist, wobei eine der beiden Kunststoffkomponenten elektrisch leitfähig ist und die beiden Pole (6,7) des Wasserstandssensor (5) bildet, wogegen die andere Kunststoffkomponente als elektrisch nicht leitfähiger Träger- /Isolierkunststoff (8) ausgebildet ist.

5. Kraftstofffilter nach Anspruch 1,
**dadurch gekennzeichnet,**
**dass** der zweite elektrisch leitende Pol (7) des Wasserstandssensors (5) als Metallstift (9) am Wasserstandssensor (5) ausgebildet ist.

6. Kraftstofffilter nach Anspruch 5,
**dadurch gekennzeichnet,**
**dass** der Metallstift (9) mit einer Oxidschicht, beispielsweise einer Silber- oder Zinnschicht, überzogen oder mit einem elektrisch leitfähigen Kunststoff umspritzt ist.

7. Kraftstofffilter nach einem der vorhergehenden Ansprüche,
**dadurch gekennzeichnet,**
**dass** der elektrisch leitfähige Kunststoff ein faserverstärkter Thermoplast mit zumindest 8 Gew.-%, vorzugsweise ca. 40 Gew.-%, Kohlefasern ist.

8. Kraftstofffilter nach einem der vorhergehenden Ansprüche,
**dadurch gekennzeichnet,**
**dass** der elektrisch leitfähige Kunststoff Glasfasern als Verstärkungselemente aufweist.

9. Kraftstofffilter nach einem der vorhergehenden Ansprüche,
**dadurch gekennzeichnet,**
- **dass** der elektrisch leitfähige Kunststoff ein PA66 GF22 CF8 ist und Polyamid 66 mit 22 Gew.-% Glasfasern und 8-Gew. Kohlefasern aufweist, oder
- **dass** der elektrisch leitfähige Kunststoff ein PA66 CF40 ist und Polyamid 66 mit 40-Gew.-% Kohlefasern aufweist.

## Claims

1. A fuel filter (1) with a housing (2) and a filter element (3) arranged therein, and with a water collection chamber (4) for collecting water separated from the fuel and with a water level sensor (5) for detecting a water level in the water collection chamber (4),
**characterized in**
**that** on the water level sensor (5) a first terminal (6) of an electrically conductive plastic is formed.

2. The fuel filter according to claim 1,
**characterized in**
**that** the housing (2) is formed from metal or at least partly from electrically conductive plastic and forms a second electrically conductive terminal (7) of the water level sensor (5).

3. The fuel filter according to claim 1,
**characterized in**
**that** on the water level sensor (5) a second terminal (7) of an electrically conductive plastic is arranged.

4. The fuel filter according to claim 3,
**characterized in**
**that** the water level sensor (5) is formed as a two-component plastic injection moulding, wherein one of the two plastic components is electrically conductive and forms the two terminals (6, 7) of the water level sensor (5), whereas the other plastic component is formed as electrically non-conductive substrate/insulating plastic (8).

5. The fuel filter according to claim 1,
**characterized in**
**that** the second electrically conductive terminal (7) of the water level sensor (5) is formed as a metal pin (9) on the water level sensor (5).

6. The fuel filter according to claim 5,
**characterized in**
**that** the metal pin (9) is coated with an oxide layer, for example a silver or tin layer, or overmoulded with an electrically conductive plastic.

7. The fuel filter according to any one of the preceding claims,
**characterized in**
**that** the electrically conductive plastic is a fibre-reinforced thermoplastic with at least 8 % by weight, preferentially approximately 40 % by weight of carbon fibres.

8. The fuel filter according to any one of the preceding claims,
**characterized in**
**that** the electrically conductive plastic comprises glass fibres as reinforcing elements.

9. The fuel filter according to any one of the preceding claims,
**characterized**
- **in that** the electrically conductive plastic is a PA66 GF22 CF8 and comprises polyamide 66 with 22 % by weight of glass fibres and 8 % by weight of carbon fibres, or
- **in that** the electrically conductive plastic is a PA66 CF40 and comprises polyamide 66 with 40 % by weight of carbon fibres.

## Revendications

1. Filtre à carburant (1) avec un boîtier (2) et un élément de filtre (3) agencé dans celui-ci, ainsi qu'avec un espace collecteur d'eau (4) pour la collecte d'eau séparée du carburant et avec un capteur de niveau d'eau (5) pour la détection d'un niveau d'eau dans l'espace collecteur d'eau (4),
**caractérisé en ce**
**qu'**un premier pôle (6) en une matière plastique électroconductrice est réalisé au niveau du capteur de niveau d'eau (5).

2. Filtre à carburant selon la revendication 1,
**caractérisé en ce**
**que** le boîtier (2) est réalisé en métal ou au moins partiellement en matière plastique électroconductrice et forme un second pôle (7) électroconducteur du capteur de niveau d'eau (5).

3. Filtre à carburant selon la revendication 1,
**caractérisé en ce**
**qu'**un second pôle (7) en une matière plastique électroconductrice est agencé au niveau du capteur de niveau d'eau (5).

4. Filtre à carburant selon la revendication 3,
**caractérisé en ce**
**que** le capteur de niveau d'eau (5) est réalisé comme une partie moulée par injection en matière plastique à deux composants, dans lequel un des deux composants en matière plastique est électroconducteur et forme les deux pôles (6, 7) du capteur de niveau d'eau (5), alors que l'autre composant en matière plastique est réalisé comme une matière plastique support/isolante non électroconductrice (8).

5. Filtre à carburant selon la revendication 1,
**caractérisé en ce**
**que** le second pôle électroconducteur (7) du capteur de niveau d'eau (5) est réalisé comme tige métallique (9) au niveau du capteur de niveau d'eau (5).

6. Filtre à carburant selon la revendication 5,
**caractérisé en ce**
**que** la tige métallique (9) est revêtue d'une couche d'oxyde, par exemple d'une couche d'argent ou de zinc ou est surmoulée avec une matière plastique électroconductrice.

7. Filtre à carburant selon l'une des revendications précédentes,
**caractérisé en ce**
**que** la matière plastique électroconductrice est un thermoplaste renforcé par des fibres avec au moins 8 % en poids, de préférence environ 40 % en poids de fibres de carbone.

8. Filtre à carburant selon l'une des revendications précédentes,
**caractérisé en ce**
**que** la matière plastique électroconductrice présente des fibres de verre comme éléments de renforcement.

9. Filtre à carburant selon l'une des revendications précédentes,
**caractérisé en ce**
- **que** la matière plastique électroconductrice est du PA66 GF22 CF8 et présente du polyamide 66 avec 22 % en poids de fibres de verre et 8 % en poids de fibres de carbone, ou
- **que** la matière plastique électroconductrice est du PA66 CF40 et présente du polyamide 66 avec 40 % en poids de fibres de carbone.
